# EUROPÄISCHE PATENTSCHRIFT

(11) **EP 1 144 177 B1**
(45) Veröffentlichungstag und Bekanntmachung des Hinweises auf die Patenterteilung: **28.05.2003**
(21) Anmeldenummer: 00903498.4
(22) Anmeldetag: 08.01.2000
(51) Int. Cl.: B29C 51/10, B29C 51/16, B29C 51/30

(54) **SPRITZGIESSVORRICHTUNG ZUM HINTERSPRITZEN EINES OBERMATERIALS MIT KUNSTSTOFF UND VERFAHREN**
INJECTION MOLDING DEVICE FOR INJECTING PLASTIC IN THE BACK OF A TOP MATERIAL AND PROCESS
DISPOSITIF D'INJECTION UTILISE POUR DOUBLER UN MATERIAU DE SUPERSTRUCTURE AVEC DU PLASTIQUE ET PROCEDE

(30) Priorität: 28.01.1999 DE 19903338
(43) Veröffentlichungstag der Anmeldung: 17.10.2001
(73) Patentinhaber: Summerer, Franz Josef, 83253 Rimsting (DE)
(72) Erfinder: Summerer, Franz Josef, 83253 Rimsting (DE)
(74) Vertreter: Graf Lambsdorff, Matthias, Dr.
(86) Internationale Anmeldenummer: DE0000062
(87) Internationale Veröffentlichungsnummer: WO00044550

(56) Entgegenhaltungen:
- WO-A-97/06939
- GB-A- 2 195 940

## Beschreibung

Die Erfindung betrifft eine Spritzgießvorrichtung zum Hinterspritzen eines flexiblen Obermaterials, insbesondere Dekormaterials wie Stoff, Leder, Folie oder dergleichen, mit Kunststoff gemäß Anspruch 1, sowie Verfahren zur Herstellen eine Verbundformteile gemäß den Ansprüchen 11 und 12.

Es ist bekannt, derartige Obermaterialien mit Kunststoff zu hinterspritzen, so daß ein zweilagiges Formteil aus Verbundmaterial entsteht. Derartige Verbundformteile finden vielfältigen Einsatz, beispielsweise in der Automobilindustrie als innere Türseitenverkleidungen, Dachverkleidungen, Autositzteile oder dergleichen.

Das Hinterspritzen mit Kunststoff bietet den Vorteil, daß das flexible Obermaterial fest mit einem formstabilen Trägermaterial verbunden wird, so daß es auf einfache Weise an einer Unterkonstruktion befestigt werden kann. Ein separates Bespannen und Festkleben des Obermaterials an einem Trägermaterial erübrigt sich damit. Hinterspritzte Verbundteile ermöglichen somit eine schnelle, einfache, kostengünstige und qualitativ hochwertige Fertigung. Außerdem muß kein Kleber verwendet werden, so daß auch unangenehme, häufig gesundheitsschädliche Ausdünstungen vermieden werden.

Beim Hinterspritzen muß darauf geachtet werden, daß die oft empfindlichen Obermaterialien nicht beschädigt werden. Hierzu wird der Kunststoff mit möglichst geringem Druck in den formgebenden Raum, der sogenannten Kavität, eingespritzt, in der sich bereits das Obermaterial befindet. Der eingespritzte Kunststoff drückt dabei das Obermaterial an die Kavitätswand. Das Einspritzen mit geringem Druck wird dadurch ermöglicht, daß das Spritzgießwerkzeug zunächst noch nicht vollkommen geschlossen wird, sondern geringfügig, beispielsweise 2 bis 10 mm, geöffnet bleibt. Um zu vermeiden, daß in dieser Position eingespritzter Kunststoff über den Randbereich der Kavität austritt, ist bei bekannten Spritzgießwerkzeugen die Matrizenformplatte mit einer sogenannten Tauchkante versehen, d.h. einer Verlängerung der die Kavität begrenzenden Wand der Matrizenformplatte. Diese Tauchkante ist bei bekannten Spritzgießwerkzeugen fester Bestandteil der Matrizenformplatte und bildet zusammen mit einer gegenüberliegenden Tauchkante des Formkerns einen Tauchkantenspalt, der geringfügig, beispielsweise mit einem Winkel von 5°, konisch ausgebildet sein kann. Das vor dem Hinterspritzen in die Kavität eingelegte Obermaterial erstreckt sich auch in den Tauchkantenspalt hinein und wird beim vollständigen Schließen des Spritzgießwerkzeugs, das während des Einspritzens von Kunststoff erfolgt, im Tauchkantenspalt eingeklemmt.

Nachteilig ist bei bekannten Vorrichtungen, daß bei Verschleiß der matrizenseitigen Tauchkante, der aufgrund der relativ hohen Belastung erheblich ist, die gesamte Matrizenformplatte ausgetauscht oder nachgearbeitet werden muß. Weiterhin ist eine Veränderung des Tauchkantenspaltmaßes nicht möglich, was aus unterschiedlichen Gründen, beispielsweise aufgrund verschiedener Oberstoffe, manchmal wünschenswert wäre.

Der Erfindung liegt die Aufgabe zugrunde, eine Spritzgießvorrichtung zu schaffen, mit der das Hinterspritzen des Obermaterials mit möglichst geringem Werkzeug- und Arbeitsaufwand ermöglicht und auf qualitativ besonders hochwertige Weise durchgeführt werden kann.

Diese Aufgabe wird erfindungsgemäß durch die Merkmale der Vorrichtung gemäß Anspruch 1 sowie durch die Merkmale der Verfahren gemäß der Ansprüche 11 bzw. 12 gelöst. Vorteilhafte Ausführungsformen der Erfindung sind in den weiteren Ansprüchen beschrieben.

Bei der erfindungsgemäßen Spritzgießvorrichtung ist die matrizenseitige Tauchkante an einem verschiebbar an der Matrizenformplatte gehalterten Tauchkantenschieber ausgebildet.

Der erfindungsgemäße Tauchkantenschieber bietet den Vorteil, daß er bei Verschleiß ausgewechselt werden kann, ohne die gesamte Matrizenformplatte austauschen oder Konturbereiche der Kavität nacharbeiten zu müssen. Dies hat eine erhebliche Kosten- und Zeitersparnis zur Folge. Weiterhin ist es möglich, durch entsprechendes Positionieren des Tauchkantenschiebers das Tauchkantenspaltmaß zu verändern und optimal auf das Obermaterial abzustimmmen. Auf diese Weise kann das Maß feinreguliert werden, um das das Obermaterial beim vollständigen Schließen des Spritzgießwerkzeugs zusammengedrückt wird. Ein Verziehen und ein unschöne Markierungen hinterlassendes Überdehnen des Obermaterials kann ebenfalls vermieden werden, da der Tauchkantenspalt im Bedarfsfall etwas vergrößert werden kann. Weiterhin ist es möglich, den Tauchkantenschieber derart einzustellen, daß im vollkommen geschlossenen Zustand des Spritzgießwerkzeugs noch eine ganz geringfügige Menge Kunststoff von der Kavität in den Tauchkantenspalt austreten kann, wodurch eine steife Trennstelle geschaffen wird, die später ein einfacheres Abtrennen des Obermaterials an dieser Stelle ermöglicht.

Gemäß einer vorteilhaften Ausführungsform ist die formkernseitige Tauchkante an einem verschiebbar am Formkern geführten Trennschieber ausgebildet. Auch mittels eines derartigen Trennschiebers kann das Tauchkantenspaltmaß entsprechend eingestellt und verändert werden. Hierzu können gegebenenfalls entsprechende Spaltmaßeinstellelemente eingesetzt werden. Weiterhin bietet der separate Trennschieber den Vorteil, daß er bei Verschleiß ausgewechselt werden kann, ohne die genannte Formkernplatte oder den Formkern auswechseln oder nacharbeiten zu müssen.

Besonders vorteilhaft ist es, wenn der Trennschieber eine Scherkante zum Abtrennen des Obermaterials am Ende der Kavität aufweist. Bei dieser Ausführungsform wird der Trennschieber, der den Tauchkantenspalt begrenzt, gleichzeitig dazu verwendet, nach dem Hinterspritzvorgang das obermaterial am Ende der Kavität abzuscheren. Während des Spritzvorgangs dient der Trennschieber zur randseitigen Begrenzung der Kavität, um dort ein unerwünschtes Austreten des Kunststoffs zu verhindern. Das Verschieben des Trennschiebers, das den Abschneidvorgang bewerkstelligt, kann bei geschlossenem Spritzgießwerkzeug unmittelbar nach dem Spritzvorgang durchgeführt werden, sobald der Kunststoff entsprechend verfestigt ist. Es ist somit nicht mehr erforderlich, erst nach dem Entfernen des Werkstücks aus der Kavität das randseitig überstehende Obermaterial mittels eines separaten Abschneidvorgangs abzutrennen. Hierdurch kann eine erhebliche Zeitersparnis erzielt werden. Weiterhin ist es auch nicht erforderlich, separate Abtrennvorrichtungen vorzusehen, was eine beträchtliche Kostenersparnis zur Folge hat. Beim Abschervorgang besteht auch keine Gefahr, daß zusätzliche angespritzte Teile, beispielsweise Gummidichtlippen, beschädigt werden.

Vorteilhafterweise ist an der der Kavität zugewandten Seite des Trennschiebers eine Zusatzkavität ausgebildet, die durch Verschieben des Trennschiebers zwischen einer bezüglich der Kavität versetzten Position und einer in die Kavität einmündenden Position verfahrbar ist. Diese Zusatzkavität kann zum Anspritzen eines weiteren Teils, beispielsweise einer Gummidichtlippe, an das hinterspritzte Formteil verwendet werden. Dieses Anspritzen erfolgt zweckmäßigerweise unmittelbar nach dem Hinterspritzen in der Kavität, sobald sich der Kunststoff so weit verfestigt hat, daß der Trennschieber, der die Kavität randseitig begrenzt, verschoben werden kann. Das angespritzte Teil verbindet sich auf diese Weise fest mit dem hinterspritzten Kunststoff. Hierdurch entfällt ein nachträgliches Montieren dieses Teils. Besonders vorteilhaft ist dabei, daß mittels einer einzigen Hubbewegung zwei Arbeitsschritte ausgeführt werden können, nämlich das Abtrennen des Obermaterials und das Öffnen der Zusatzkavität zum Anspritzen eines weiteren Teils. Die Zyklusdauer wird entsprechend reduziert.

Gemäß einer vorteilhaften Ausführungsform ist der Tauchkantenschieber mechanisch mittels Federkraft oder pneumatisch in seine Anschlagposition vorgespannt. Beim Zurückziehen des Trennschiebers wird daher das Obermaterial zunächst stärker eingeklemmt, bis die Federkraft des Tauchkantenschiebers überwunden ist. Durch dieses Einklemmen ist das Obermaterial einwandfrei fixiert, was ein sauberes Abscheren mit einem definierten Schnitt unterstützt.

Die Erfindung wird nachfolgend anhand der Zeichnungen beispielhaft näher erläutert. In diesen zeigen
- Figur 1 :: in der rechten Hälfte eine schematische, teilweise aufgebrochene Ansicht der erfindungsgemäßen Spritzgießvorrichtung im geschlossenen Zustand, während die linke Hälfte den Stand der Technik zeigt,
- Figur 2 :: einen vergrößerten Detailausschnitt der erfindungsgemäßen Spritzgießvorrichtung von Figur 1 im Bereich des Tauchkantenspalts,
- Figur 3 :: eine vergrößerte Detaildarstellung der Spritzgießvorrichtung von Figur 1, wobei sich der Tauchkantenschieber und Trennschieber in der eingefahrenen Position befinden, die während des Hinterspritzens eingenommen wird,
- Figur 4 :: eine Darstellung gemäß Figur 3, wobei sich der Tauchkantenschieber und Trennschieber in einer zurückgezogenen Trenn- und Anspritzposition befinden, und
- Figur 5 :: eine Darstellung gemäß Figur 3, wobei der Tauchkantenschieber an einem Konturschie-ber verschiebbar gehaltert ist.

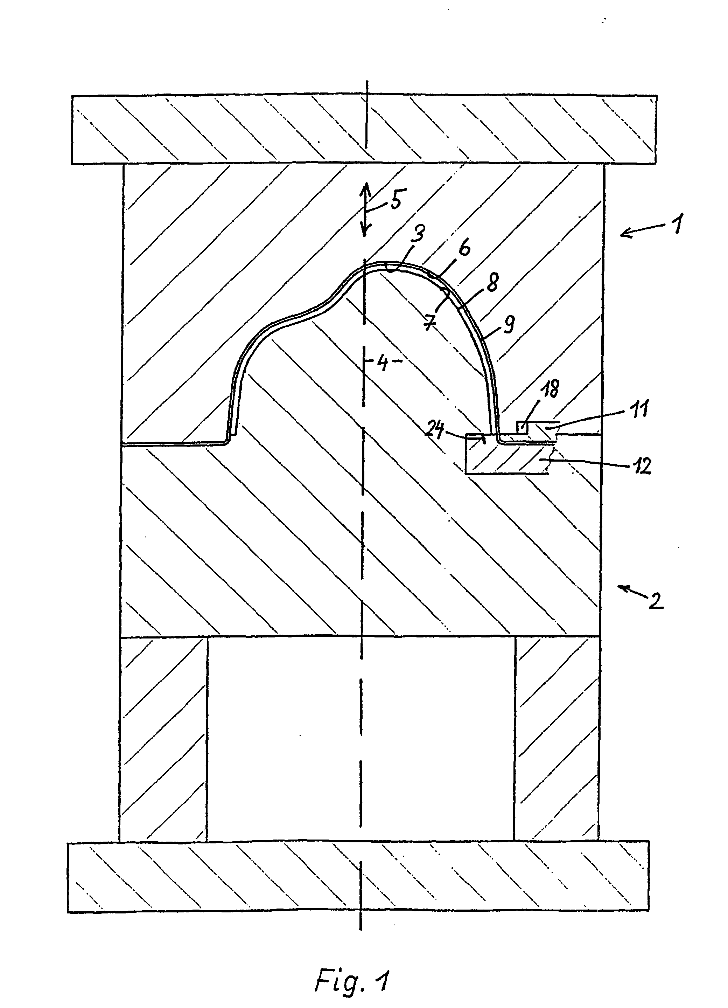

Wie aus Figur 1 ersichtlich, weist die erfindungsgemäße spritzgießvorrichtung eine Matrizenformplatte 1 und eine Formkernplatte 2 auf. In der Matrizenformplatte 1 ist eine Aussparung 3 mit einer bestimmten dreidimensionalen Form vorgesehen. Die Formkernplatte 2 weist an ihrem vorderen Ende einen Formkern 4 auf, dessen äußere Formgebung an die Form der Aussparung 3 angepaßt ist. Durch ein Verfahren der Matrizenformplatte 1 relativ zur Formkernplatte 2 in Richtung des Pfeils 5 wird der Formkern 4 in die Aussparung 3 eingeführt oder aus dieser entfernt.

Auch im vollkommen geschlossenen Zustand, der in Figur 1 gezeigt ist, weist die Begrenzungswand 6 der Aussparung 3 zur äußeren Begrenzungswand 7 des Formkerns 4 einen vorbestimmten Abstand auf, wodurch eine Kavität 8 gebildet wird. Die Form der Kavität 8 bestimmt die Form des mittels eines Hinterspritzvorgangs herzustellenden Endprodukts.

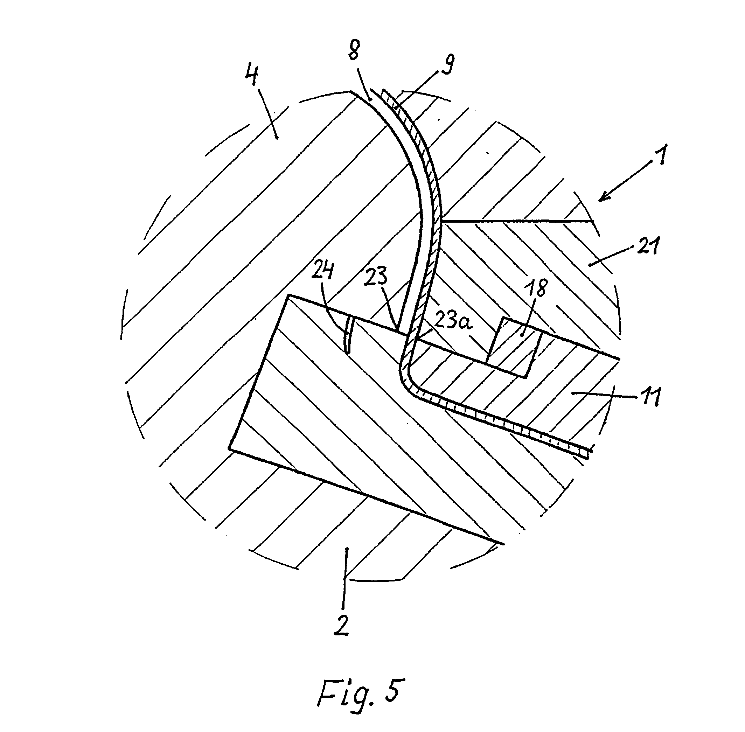

In der Kavität 8 ist ein Obermaterial 9 aus einem flexiblen Material, beispielsweise Stoff, Leder oder Folie, angeordnet. Dieses Obermaterial 9 liegt an der matrizenseitigen Begrenzungswand 6 an und erstreckt sich über den Randbereich der Kavität 8 hinaus in einen Tauchkantenspalt 10 hinein. Dieser Tauchkantenspalt 10 wird bei der erfindungsgemäßen Vorrichtung durch einen an der Matrizenformplatte 1 verschiebbar gehalterten Tauchkantenschieber 11 und durch einen an der Formkernplatte 2 verschiebbar gehalterten Trennschieber 12 begrenzt. Alternativ hierzu ist es auch möglich, daß der Tauchkantenschieber 11 auf einem in Figur 5 dargestellten Konturschieber 21 verschiebbar gehaltert ist. Der Konturschieber 21 ist seinerseits verschiebbar an der Matrizenformplatte 1 gehaltert und begrenzt die Kavität 8 matrizenseitig in hinterschnittenen Bereichen.

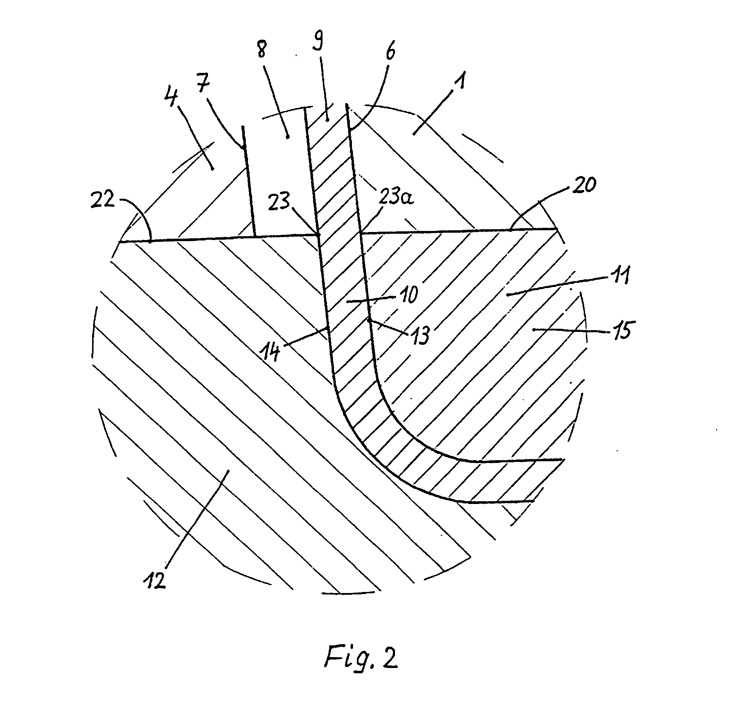

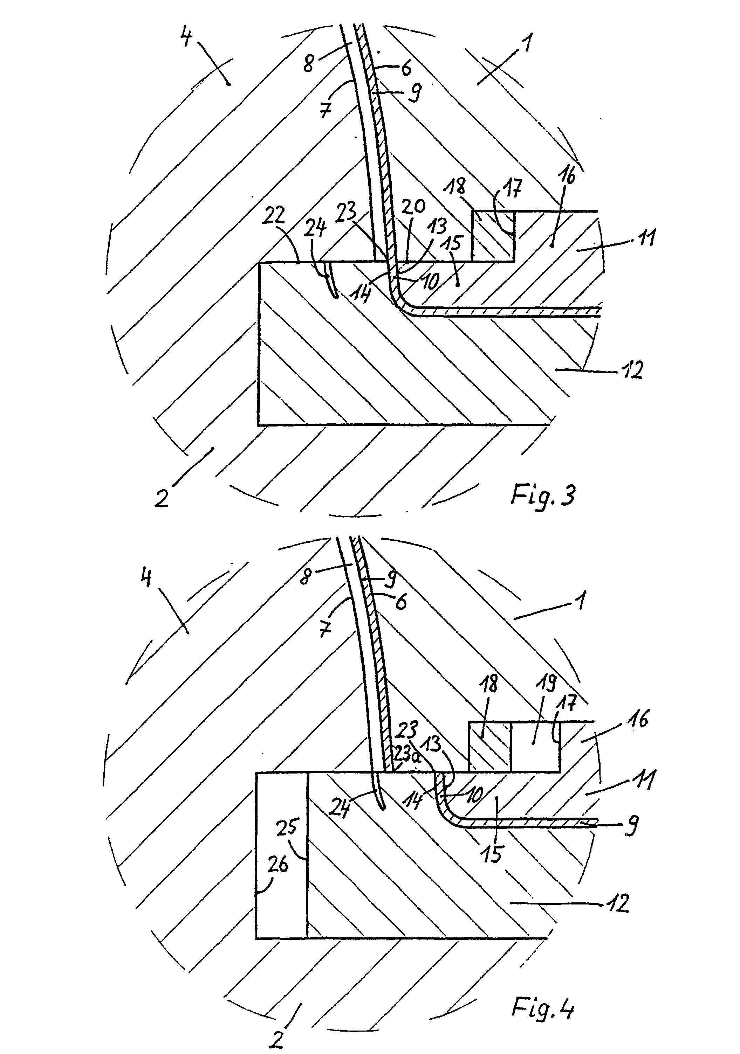

Wie aus den Figuren 1 bis 4 erkennbar, verläuft der Tauchkantenspalt 10 in dem an die Kavität 8 angrenzenden Bereich zunächst geradlinig weiter und biegt dann mit einem Winkel von etwa 100° seitlich nach außen ab. Die Begrenzungswand des Tauchkantenschiebers 11, die an die Begrenzungswand der Aussparung 3 geradlinig anschließt und sich etwa bis zur Biegung des Tauchkantenspalts 10 erstreckt, wird als matrizenseitige Tauchkante 13 bezeichnet. Die der matrizenseitigen Tauchkante 13 gegenüberliegende Begrenzungswand des Trennschiebers 12 wird als formkernseitige Tauchkante 14 bezeichnet. Die Tauchkanten 13, 14 können zueinander geringfügig konisch verlaufen und einen sich nach oben öffnenden Winkel von beispielsweise 5° einnehmen. Der Abstand der Tauchkanten 13, 14 zueinander, d.h. das Tauchkantenspaltmaß, ist im geschlossenen Zustand der Spritzgießvorrichtung kleiner als die Dicke des Obermaterials 9, so daß das Obermaterial 9 während des Hinterspritzvorgangs im Tauchkantenspalt 10 zusammengedrückt wird. Hierdurch wird einerseits das Obermaterial 9 fixiert und andererseits vermieden, daß Kunststoff aus der Kavität 8 in den Tauchkantenspalt 10 austritt.

Der Tauchkantenschieber 11 ist querverschiebbar an der Matrizenformplatte 1 befestigt. Der Tauchkantenschieber 11 kann somit von der in den Figuren 1 bis 3 dargestellten Stellung, in welcher die Tauchkante 13 mit der Begrenzungswand 6 der Aussparung 3 fluchtet, seitlich nach außen bewegt werden, wie in Figur 4 dargestellt. Weiterhin ist der Tauchkantenschieber 11 derart ausgebildet, daß er einen schmäleren, vorderen Tauchkantenabschnitt 15 und einen verbreiterten hinteren Abschnitt 16 aufweist. Zwischen den Abschnitten 15, 16 wird somit eine Schulter 17 gebildet, die als Anschlag zur Begrenzung des Verschiebewegs des Tauchkantenschiebers 11 nach innen dient. Die Schulter 17 wirkt mit einem Spaltmaßeinstellelement 18 zusammen, das als Gegenanschlag dient und in einem Aufnahmeraum 19 der Matrizenformplatte 1 festgelegt ist. Die an der Matrizenformplatte 1 anliegende obere Begrenzungswand 20 des Tauchkantenschiebers 11 liegt in der stirnseitigen Begrenzungsebene der Kavität 8 im geschlossenen Zustand der Spritzgießvorrichtung.

Der Verschiebeweg des Trennschiebers 12 nach innen kann beispielsweise dadurch begrenzt werden, daß die Stirnseite 25 des Trennschiebers 12 an einem stirnseitigen Anschlag 26 der Formkernplatte 2 oder des Formkerns 4 anschlägt. Zwischen dem Trennschieber 12 und dem stirnseitigen Anschlag 26 können nicht dargestellte Einstellelemente ähnlich dem Spaltmaßeinstellelement 18 vorgesehen sein. Weiterhin ist es auch ohne weiteres möglich, daß der Trennschieber 12 und die Formkernplatte 2 oder der Formkern 4 ähnliche vorspringende Schultern wie der Tauchkantenschieber 11 und die Matrizenformplatte 1 aufweisen, die als Anschläge zur Bestimmung des Verschiebewegs des Trennschiebers 12 nach innen und damit auch zur Einstellung des Tauchkantenspaltmaßes dienen.

Der an der Formkernplatte 2 gehalterte Trennschieber 12 ist in gleicher Weise und in gleicher Richtung verschiebbar wie der Tauchkantenschieber 11. Hierzu weist der Trennschieber 12 eine obere Begrenzungswand 22 auf, die mit der oberen Begrenzungswand 20 des Tauchkantenschiebers 11 fluchtet. Die Übergangsstelle zwischen der formkernseitigen Tauchkante 14 und der oberen Begrenzungswand 22 ist als scharfkantige Scherkante 23 ausgebildet. Wird der Trennschieber 12 zusammen mit dem Tauchkantenschieber 11 nach dem Hinterspritzvorgang seitlich nach außen bewegt, wie in Figur 4 dargestellt, so schert die Scherkante 23 das Obermaterial 9 an der Übergangsstelle zwischen Kavität 8 und Tauchkantenspalt 10 ab, wobei die Scherkante 23 mit einer Scherkante 23a der Matrizenformplatte 1 zusammenwirkt. Die Bewegungsrichtung des Trennschiebers 12 verläuft bei dem gezeigten Ausführungsbeispiel in einem Winkel von etwa 100° quer zum Obermaterial 9.

Weiterhin ist im Trennschieber 12 eine Zusatzkavität 24 vorgesehen, die sich von der oberen Begrenzungswand 22 in den Trennschieber 12 hineinerstreckt. Diese Zusatzkavität 24 dient zum Anspritzen eines Zusatzelements, beispielsweise einer Gummidichtlippe, an das fertig hinterspritzte Kunststoffteil, das innerhalb der Kavität 8 liegt.

Nachfolgend wird die Fertigung eines hinterspritzten Produkts mittels der erfindungsgemäßen Spritzgießvorrichtung näher beschrieben.

Bei geöffneter Spritzgießvorrichtung befindet sich der Formkern 4 zunächst außerhalb der matrizenseitigen Aussparung 3. Der Tauchkantenschieber 11 und der Trennschieber 12 befinden sich in ihrer inneren Position, d.h. im dargestellten Ausführungsbeispiel ganz links.

Das Obermaterial 9 wird nun in die Aussparung 3 eingelegt, wobei die Randbereiche des Obermaterials 9 über die matrizenseitige Tauchkante 13 gezogen und weiter außen beispielsweise mittels Stiften fixiert werden. Die Matrizenformplatte 1 wird anschließend in Richtung der Formkernplatte 2 verfahren, so daß der Formkern 4 in die Aussparung 3 eintaucht.

Die spitzgießvorrichtung wird zunächst noch nicht vollständig geschlossen, sondern bleibt zunächst noch wenige Millimeter geöffnet. Da das Spaltmaß innerhalb der Kavität 8 somit noch relativ groß ist, kann Kunststoff mit relativ niedrigem Druck und damit auf eine das Obermaterial 9 schonende Weise in die Kavität 8 eingespritzt werden. Der Kunststoff wird hierbei über eine nicht gezeigte, innerhalb des Formkerns 4 liegende Spritzdüse zugeführt. Der eingespritzte Kunststoff drückt das Obermaterial 9 an die matrizenseitige Begrenzungswand 6 und verteilt sich von einem mittigen Bereich nach außen zu den Randbereichen der Kavität 8. In dem vorerst noch etwas geöffneten Zustand der Spritzgießvorrichtung befindet sich die obere Begrenzungswand 22 des Trennschiebers 12 und die formkernseitige Tauchkante 14 bereits nahe der matrizenseitigen Tauchkante 13 des Tauchkantenschiebers 11, so daß ein unerwünschtes Austreten von Kunststoff in diesem Bereich verhindert wird.

Während des Hinterspritzvorgangs, bei dem der Kunststoff fest mit dem Obermaterial 9 verbunden wird, wird die spritzgießvorrichtung vollständig geschlossen, so daß sie die in Figur 1 gezeigte Position einnimmt. Das Obermaterial 9 wird nun im Tauchkantenspalt 10 etwas zusammengedrückt. Der dem Tauchkantenspalt 10 benachbarte Bereich der oberen Trennschieber-Begrenzungswand 22 begrenzt die Kavität 8 randseitig.

Nach Beendigung des Hinterspritzvorgangs und einer gewissen Verfestigung des Kunststoffmaterials wird nun der Trennschieber 12 zusammen mit dem Tauchkantenschieber 11 seitlich nach außen gezogen, wie in Figur 4 gezeigt ist. Hierbei schert die Schneidkante 23 das Obermaterial 9 ab. Das Verschieben des Trennschiebers 12 erfolgt so weit, bis die Zusatzkavität 24 unterhalb der Kavität 8 in demjenigen Bereich liegt, in dem sich der hinterspritzte Kunststoff befindet. Nun wird in die Zusatzkavität 24 ein anderes Material, beispielsweise Gummi, eingespritzt. Hierbei wird das Kunststoffmaterial im Randbereich teilweise aufgeschmolzen, so daß sich das Gummimaterial fest mit dem Kunststoff verbindet. Anschließend wird die Spritzgießvorrichtung vollständig geöffnet und das fertige Endprodukt mittels nicht gezeigter Auswurfeinrichtungen vom Formkern 4 entfernt.

## Patentansprüche

1. spritzgießvorrichtung zum Hinterspritzen eines flexiblen Obermaterials (9), insbesondere Dekormaterials wie Stoff, Leder, Folie oder dergleichen, mit Kunststoff innerhalb einer Kavität (8), die zwischen einer Matrizenformplatte (1) und einem Formkern (4) ausgebildet ist, mit einer matrizenseitigen und einer formkernseitigen Tauchkante (13, 14), die einen an die Kavität (8) anschließenden Tauchkantenspalt (10) begrenzen, in den sich das in der Kavität (8) angeordnete Obermaterial (9) hineinerstreckt, wobei die matrizenseitige Tauchkante (13) an einem verschiebbar an der Matrizenformplatte (1) gehalterten Tauchkantenschieber (11) ausgebildet ist.

2. spritzgießvorrichtung nach Anspruch 1, **dadurch gekennzeichnet, daß** der Tauchkantenschieber (11) einen Anschlag aufweist, der mit einem an der Matrizenformplatte (1) ausgebildeten Gegenanschlag zur Begrenzung des Verschiebewegs zusammenwirkt.

3. Spritzgießvorrichtung nach Anspruch 2, **dadurch gekennzeichnet, daß** zwischen dem Anschlag des Tauchkantenschiebers (11) und dem Gegenanschlag der Matrizenformplatte (1) ein Aufnahmeraum (19) zum Einsetzen von Spaltmaßeinstellelementen (18) vorgesehen ist.

4. spritzgießvorrichtung nach einem der vorhergehenden Ansprüche, **dadurch gekennzeichnet, daß** die formkernseitige Tauchkante (14) an einem verschiebbar an der Formkernplatte (2) geführten Trennschieber (12) ausgebildet ist.

5. Spritzgießvorrichtung nach einem der vorhergehenden Ansprüche, **dadurch gekennzeichnet, daß** der Trennschieber (12) einen Anschlag aufweist, der mit einem an der Formkernplatte (2) oder dem Formkern (4) ausgebildeten Gegenanschlag zur Begrenzung des Verschiebewegs zusammenwirkt.

6. spritzgießvorrichtung nach Anspruch 5, **dadurch gekennzeichnet, daß** zwischen dem Anschlag des Trennschiebers (12) und dem Gegenanschlag der Formkernplatte (2) bzw. des Formkerns (4) ein Aufnahmeraum zum Einsetzen von Spaltmaßeinstellelementen vorgesehen ist.

7. spritzgießvorrichtung nach einem der Ansprüche 4 bis 6, **dadurch gekennzeichnet, daß** der Trennschieber (12) eine Scherkante (23) zum Abtrennen des Obermaterials (9) am Ende der Kavität (8) aufweist.

8. Spritzgießvorrichtung nach Anspruch 4 oder 5, **dadurch gekennzeichnet, daß** an der der Kavität (8) zugewandten Seite des Trennschiebers (12) eine Zusatzkavität (24) ausgebildet ist, die durch Verschieben des Trennschiebers (12) zwischen einer bezüglich der Kavität (8) versetzten Position und einer in die Kavität (8) einmündenden Position verfahrbar ist.

9. Spritzgießvorrichtung nach einem der vorhergehenden Ansprüche, **dadurch gekennzeichnet, daß** der Tauchkantenschieber (11) mechanisch mittels Federkraft oder pneumatisch in seine Anschlagposition vorgespannt ist.

10. spritzgießvorrichtung nach einem der vorhergehenden Ansprüche, **dadurch gekennzeichnet, daß** der Tauchkantenschieber (11) an einem Konturschieber (21) der Matrizenformplatte (1) verschiebbar gehaltert ist.

11. Verfahren zum Herstellen eines Verbundformteils, bei dem ein flexibles Obermaterial (9), insbesondere Dekormaterial wie Stoff, Leder, Folie oder dergleichen, innerhalb einer Kavität (8), die zwischen einer Matrizenformplatte (1) und einem Formkern (4) ausgebildet ist, mit Kunststoff hinterspritzt wird, wobei sich das Obermaterial (9) in einen an die Kavität (8) anschließenden Tauchkantenspalt (10) hinein erstreckt, der durch eine matrizenseitige Tauchkante (13) und eine formkernseitige Tauchkante (14) begrenzt wird, wobei ein verschiebbar an der Formkernplatte (2) geführter Trennschieber (12), an dem die formkemseitige Tauchkante (14) ausgebildet ist , zusammen mit einem verschiebbar an der Matrizenformplatte (1) gehalterten Tauchkantenschieber (11), an dem die matrizenseitige Tauchkante (13) ausgebildet ist, nach dem Hinterspritzen des Obermaterials (9) derart verschoben werden, dass in eine Zusatzkavität (24) eine weitere Kunststoffkomponente eingespritzt werden kann.

12. Verfahren zum Herstellen eines Verbundformteils, bei dem ein flexibles Obermaterial (9), insbesondere Dekormaterial wie Stoff, Leder, Folie oder dergleichen, innerhalb einer Kavität (8), die zwischen einer Matrizenformplatte (1) und einem Formkern (4) ausgebildet ist, mit Kunststoff hinterspritzt wird, wobei sich das Obermaterial (9) in einen an die Kavität (8) anschließenden Tauchkantenspalt (10) hinein erstreckt, der durch eine matrizenseitige Tauchkante (13) und eine formkernseitige Tauchkante (14) begrenzt wird, wobei ein verschiebbar an der Formkernplatte (2) geführter Trennschieber (12), an dem die formkernseitige Tauchkante (14) ausgebildet ist und der eine Scherkante (23) aufweist, zusammen mit einem verschiebbar an der Matrizenformplatte (1) gehalterten Tauchkantenschieber (11), an dem die matrizenseitige Tauchkante (13) ausgebildet ist, nach dem Hinterspritzen des Obermaterials (9) derart verschoben werden, dass das Obermaterial (9) am Ende der Kavität (8) mit Hilfe der Scherkante (23) abgeschert wird.

## Claims

1. An injection molding apparatus for underlaying a flexible top material (9), in particular fabric, leather, film or a similar material, with plastic inside a cavity (8), which is formed between a female mold core plate (1) and a mold core (4), with a dipping edge (14) on the female mold side and another dipping edge (13) on the mold core side, which bound a dipping edge gap (10) that adjoins the cavity (8), into which gap the top material (9) situated in the cavity (8) extends, the dipping edge (13) on the female mold side being formed on a dipping edge slider (11) that is movably mounted on the female mold plate (1).

2. The injection molding apparatus according to Claim 1, **characterised in that** the dipping edge slider (11) has a stop which interacts with a counter-stop formed on the female mold plate (1) to bound the path of motion.

3. The injection molding apparatus according to Claim 2, **characterised in that** a take-up space (19) being situated between the stop of the dipping edge slider (11) and the counter-stop of the female mold plate for insertion of elements (18) for adjusting the gap size.

4. The injection molding apparatus according to one of the preceding claims, **characterised in that** the dipping edge (14) at the mold core side is formed on a separation slider (12) which is movably guided on the mold core plate (2).

5. The injection molding apparatus according to one of the preceding claims, **characterised in that** the separation slider (12) has a stop which interacts with a counter-stop formed on the mold core plate (2) or on the mold core (4) to limit the path of motion.

6. The injection molding apparatus according to Claim 5, **characterised in that** a take-up space being situated between the stop of the separation slider (12) and the counter-stop of the mold core plate (2) or of the mold core (4) for insertion of elements for adjusting the gap size.

7. The injection molding apparatus according to one of Claims 4 to 6, **characterised in that** the separation slider (12) has a cutting edge (23) to cut off the top material (9) at an end of the cavity (8).

8. The injection molding apparatus according to Claim 4 or 5, **characterised in that** a supplementary cavity (24) is formed on that side of the separation slider (12) which faces the cavity (8), such that the supplementary cavity (24) can be moved between a position displaced relative to the cavity and a position adjoining the cavity, by moving the separation slider (12).

9. The injection molding apparatus according to one of the preceding claims, **characterised in that** the dipping edge slider (11) is pre-tensioned in its stop position pneumatically or with a spring.

10. The injection molding apparatus according to one of the preceding claims, **characterised in that** the dipping edge slider (11) is movably mounted on a contour slider (21) of the female mold core plate (1).

11. A method for producing a composite material such that a flexible top material (9), in particular a decorative material such as fabric, leather, film or a similar material, is underlaid with plastic in a cavity (8), which is formed between a female mold plate (1) and a mold core (4), such that the top material (9) extends into a dipping edge gap (10) adjoining the cavity (8), the gap being bounded by a dipping edge (13) on the female mold side and by a dipping edge (14) on the core mold side, wherein a separation slider (12), on which the dipping edge (14) on the mold core side is formed, together with a dipping edge slider (11), on which is formed the dipping edge (13) on the female mold side, are moved, after the top material (9) has been underlaid, in such a way that another plastic component can be injected into a supplementary cavity (24).

12. A method for producing a composite material such that a flexible top material (9), in particular a decorative material such as fabric, leather, film or a similar material, is underlaid with plastic in a cavity (8), which is formed between a female mold plate (1) and a mold core (4), such that the top material (9) extends into a dipping edge gap (10) adjoining the cavity (8), the gap being bounded by a dipping edge (13) on the female mold side and a dipping edge (14) on the core mold side, wherein a separation slider (12), on which the dipping edge (14) on the mold core side is formed and which has a cutting edge (23), together with a dipping edge slider (11), on which the dipping edge (13) on the female mold side is formed, after the top material (9) has been underlaid, are moved in such a way that the top material (9) is cut off at the end of the cavity (8) by virtue of the cutting edge (23).

## Revendications

1. Dispositif de coulée par injection utilisé pour doubler un matériau flexible de superstructure (9), en particulier d'un matériau de décoration tel que de l'étoffe, du cuir, un film ou similaire, avec de la matière plastique, et ceci à l'intérieur d'une cavité (8) qui est ménagée entre une plaque-matrice de moulage (1) et un noyau de moulage (4), comportant une arête de plongée côté matrice et une arête de plongée côté noyau (13, 14) délimitant un intervalle d'arête de plongée (10) qui se raccorde à la cavité (8) et jusque dans lequel s'étend le matériau de superstructure (9) agencé dans la cavité (8), dispositif dans lequel l'arête de plongée côté matrice (13) est réalisée sur un tiroir d'arête de plongée (11) retenu mobile en translation sur la plaque-matrice de moulage (1).

2. Dispositif de coulée par injection selon la revendication 1, **caractérisé en ce que** le tiroir d'arête de plongée (11) comprend une butée qui coopère avec une contre-butée réalisée sur la plaque-matrice de moulage (1) pour limiter la course de translation.

3. Dispositif de coulée par injection selon la revendication 2, **caractérisé en ce qu'**il est prévu, entre la butée du tiroir d'arête de plongée (11) et la contre-butée de la plaque-matrice de moulage (1), une chambre de réception (19) pour mettre en place des éléments (18) pour le réglage dimensionnel de l'intervalle.

4. Dispositif de coulée par injection selon l'une des revendications précédentes, **caractérisé en ce que** l'arête de plongée côté noyau (14) est réalisée sur un tiroir de séparation (12) guidé mobile en translation sur la plaque de noyau (2).

5. Dispositif de coulée par injection selon l'une des revendications précédentes, **caractérisé en ce que** le tiroir de séparation (12) comprend une butée qui coopère avec une contre-butée réalisée sur la plaque de noyau (2) ou sur le noyau de moulage (4) pour limiter la course de translation.

6. Dispositif de coulée par injection selon la revendication 5, **caractérisé en ce qu'**il est prévu, entre la butée du tiroir de séparation (12) et la contre-butée de la plaque de noyau (2) ou du noyau de moulage (4), une chambre de réception pour mettre en place des éléments pour le réglage dimensionnel de l'intervalle.

7. Dispositif de coulée par injection selon l'une des revendications 4 à 6, **caractérisé en ce que** le tiroir de séparation (12) comprend une arête de cisaillement (23) pour séparer le matériau de superstructure (9) à l'extrémité de la cavité (8).

8. Dispositif de coulée par injection selon l'une ou l'autre des revendications 4 et 5, **caractérisé en ce qu'**il est prévu sur le côté, tourné vers la cavité (8), du tiroir de séparation (12) une cavité supplémentaire (24) qui est déplaçable par déplacement du tiroir de séparation (12) entre une position décalée par rapport à la cavité (8) et une position débouchant dans la cavité (8).

9. Dispositif de coulée par injection selon l'une des revendications précédentes, **caractérisé en ce que** le tiroir d'arête de plongée (11) est précontraint vers sa position de butée par voie mécanique au moyen de la force d'un ressort ou par voie pneumatique.

10. Dispositif de coulée par injection selon l'une des revendications précédentes, **caractérisé en ce que** le tiroir d'arête de plongée (11) est retenu mobile en translation sur un tiroir de contour (21) de la plaque-matrice de moulage (1).

11. Procédé pour réaliser une pièce moulée composite, dans lequel on double un matériau flexible de superstructure (9), en particulier un matériau de décoration tel que de l'étoffe, du cuir, un film ou similaire, avec de la matière plastique, et ceci à l'intérieur d'une cavité (8) qui est ménagée entre une plaque-matrice de moulage (1) et un noyau de moulage (4), le matériau de superstructure (9) s'étendant jusque dans un intervalle d'arête de plongée (10) qui se raccorde à la cavité (8) et qui est délimité par une arête de plongée côté matrice (13) et par une arête de plongée côté noyau (14), dans lequel, après doublage du matériau de superstructure (9), un tiroir de séparation (12) guidé mobile en translation sur la plaque de noyau (2) et pourvu de l'arête de plongée côté noyau (14) est déplacé conjointement avec un tiroir d'arête de plongée (11) retenu mobile en translation sur la plaque-matrice de moulage (1) et pourvu de l'arête de plongée côté matrice (13), de telle sorte que l'on peut injecter une autre composante de la matière plastique dans une cavité supplémentaire (24).

12. Procédé pour réaliser une pièce moulée composite, dans lequel on double un matériau flexible de superstructure (9), en particulier un matériau de décoration tel que de l'étoffe, du cuir, un film ou similaire, avec de la matière plastique, et ceci à l'intérieur d'une cavité (8) qui est ménagée entre une plaque-matrice de moulage (1) et un noyau de moulage (4), le matériau de superstructure (9) s'étendant jusque dans un intervalle d'arête de plongée (10) qui se raccorde à la cavité (8) et qui est délimité par une arête de plongée côté matrice (13) et par une arête de plongée côté noyau (14), dans lequel, après doublage du matériau de superstructure (9), un tiroir de séparation (12) guidé mobile en translation sur la plaque de noyau (2) et pourvu de l'arête de plongée côté noyau (14) et pourvu d'une arête de cisaillement (23) est déplacé conjointement avec un tiroir d'arête de plongée (11) retenu mobile en translation sur la plaque-matrice de moulage (1) et pourvu de l'arête de plongée côté matrice (13), de telle sorte que le matériau de superstructure (9) est cisaillé à l'extrémité de la cavité (8) à l'aide de l'arête de cisaillement (23).
